# EUROPEAN PATENT APPLICATION

(11) **EP 4 667 975 A1**
(43) Date of publication of application: **24.12.2025**
(21) Application number: 24757249.8
(22) Date of filing: 14.02.2024
(51) Int. Cl.: G01S 19/01, G01S 19/21, G05D 1/248

(54) **METHOD FOR DETECTING GNSS ATTACK AND VEHICLE TERMINAL THEREFOR**

(30) Priority: 14.02.2023 KR 20230019677; 13.02.2024 KR 20240020301
(71) Applicant: Hyundai Motor Company, Seoul 06797 (KR); Kia Corporation, Seoul 06797 (KR)
(72) Inventor: JUNG, Chang Hun, Hwaseong-si Gyeonggi-do 18280 (KR); PARK, Seung Wook, Yongin-si Gyeonggi-do 16847 (KR); HAN, Gene Back, Hwaseong-si Gyeonggi-do 18280 (KR)
(74) Representative: Isarpatent
(86) International application number: PCT/KR2024/095140
(87) International publication number: WO 2024/172528

(57) **Abstract**

A method for detecting a Global Navigation Satellite System (GNSS) attack and a vehicle terminal therefor is provided. The method includes receiving, from an infrastructure device, first GNSS data derived based on one or more first GNSS signals received by the infrastructure device, and identifying second GNSS data based on one or more second GNSS signals received by a GNSS receiver of a vehicle, and determining whether the GNSS attack is being performed on the vehicle based on a comparison between the first GNSS data and the second GNSS data.

## Description

### [Technical Field]

The present disclosure relates to a method for detecting a Global Navigation Satellite System (GNSS) attack and a vehicle terminal therefor.

### [Background Art]

Hereinafter, descriptions described below are simply providing background information related to the present embodiment, but not constituting the prior art.

An autonomous driving system or an Advanced Driver Assistance System (ADAS) in vehicle uses a Global Navigation Satellite System (GNSS) to implement location recognition and path planning. A representative example of the GNSS is a Global Positioning System (GPS). Efficient operation of the vehicle relies greatly on the accuracy of the GNSS signal. A GNSS attack (or GNSS interference) that intentionally interferes with or manipulates the GNSS signal threatens the accuracy and reliability of the vehicle.

Representative types of the GNSS attacks include a Jamming attack and a Spoofing attack. In the Jamming attack, a disturbance signal (for example, noise) having a strength stronger than that of the GNSS signal is transmitted to a frequency band used by the GNSS, preventing a GNSS receiver from detecting and interpreting a normal GNSS signal from a satellite. In the Spoofing attack, a fake signal similar to the GNSS signal is transmitted, and thus, the GNSS receiver calculates a wrong location and time information.

A vehicle that has been subjected to the GNSS attach may lose location information or recognize a current location differently. For example, a vehicle traveling on the road with a 30km/h speed limit may, due to a GNSS attack, suddenly misidentify its location as being on a road with a 100km/h speed limit. This allows the vehicle to drive at a much higher speed than the actual speed limit, increasing the risk of accidents. On the contrary, the vehicle traveling on the road with a 100km/h speed limit may, due to a GNSS attack, suddenly misidentify its location as being on the road with a 30km/h speed limit. This may cause the vehicle to abruptly reduce its traveling speed, leading to traffic disruption on the road or even causing accidents.

Therefore, effectively detecting and defending the GNSS attack is very important for ensuring the vehicle's safety and maintaining the reliability of autonomous driving function.

### [Disclosure]

### [Technical Problem]

An object of the present disclosure is to provide a method to easily detect whether a GNSS receiver of the vehicle is being attacked, and to provide a vehicle terminal therefor.

### [Technical Solution]

According to an aspect of the present disclosure, a method performed by a vehicle terminal for detecting a GNSS attack is provided. The method includes receiving, from an infrastructure device, first GNSS data derived based on one or more first GNSS signals received by the infrastructure device, and identifying second GNSS data based on one or more second GNSS signals received by a GNSS receiver of a vehicle, and determining whether the GNSS attack is being performed on the vehicle based on a comparison between the first GNSS data and the second GNSS data.

In some embodiments, the determining may include determining that the GNSS attack is being performed on the vehicle when a difference between the first GNSS data and the second GNSS data is greater than a predetermined threshold. For example, the threshold may be dynamically determined based on a state of the vehicle. The state of the vehicle may include a current speed of the vehicle, a current acceleration of the vehicle, an acceleration capability of the vehicle, or a combination thereof. The acceleration capability of the vehicle may include a time it takes for the vehicle to accelerate from a stationary state to a predetermined speed. As another example, the threshold may be received from the infrastructure device simultaneously or at different times with the second GNSS data

In some embodiments, the second GNSS data may be transmitted periodically by the infrastructure device.

In some embodiments, the second GNSS data may include data identified from one or more second GNSS signals received by the infrastructure device. In additional or alternative embodiments, the second GNSS data may include predefined data indicating a location of the infrastructure device.

In some embodiments, the infrastructure device may include an infrastructure component of an environment in which the vehicle is driving, or an infrastructure component dedicated to detecting the GNSS attack.

In some embodiments, the GNSS attack may include a jamming attack, a spoofing attack, or a combination thereof.

According to another aspect of the present disclosure, a vehicle terminal for detecting a GNSS attack is provided. The vehicle terminal includes a memory storing instructions, and at least one processor, wherein the at least one processor executes the instructions to perform identifying first GNSS data based on one or more first GNSS signals received by a GNSS receiver of a vehicle, receiving second GNSS data from an infrastructure device, and determining whether the GNSS attack is being performed on the vehicle based on a comparison between the first GNSS data and the second GNSS data.

### [Advantageous Effects]

According to one embodiment of the present disclosure, it is possible to indirectly recognize a location of a vehicle through Vehicle-to-Infrastructure (V2I) communication with an infrastructure around an environment in which the vehicle is traveling, thereby detecting and defending against attacks on the GNSS receiver of the vehicle.

According to one embodiment of the present disclosure, it is possible to detect whether the GNSS receiver of the vehicle is under a Jamming or Spoofing attack without the need to add separate hardware to the vehicle.

According to one embodiment of the present disclosure, by effectively detecting the GNSS attack, the security of the vehicle can be enhanced and the accuracy of the autonomous driving system or advanced driver assistance system can be improved.

Effects of the present disclosure are not limited to the effects mentioned above, and other effects not mentioned can be clearly understood by those skilled in the art from the description below.

### [Description of Drawings]

FIG. 1 is a conceptual diagram illustrating a vehicle environment in which technologies of the present disclosure may be used.
FIG. 2 is a flowchart illustrating a method for detecting a GNSS attack according to one embodiment of the present disclosure.
FIG. 3 is a flowchart illustrating an exemplary operation of a vehicle (specifically, a vehicle terminal) performing GNSS attack detection according to an embodiment of the present disclosure.
FIG. 4 illustrates a simplified functional block diagram of an exemplary electronic device that may be used to implement a method according to the present disclosure.

### [Detailed Description]

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

In the exemplary embodiments of the present disclosure, a vehicle may be referred to as a concept based on a concept including various means of transportation having network communication functions. In some cases, a vehicle may be interpreted as a concept based on a concept including various land transportations such as a car, motorcycle, truck, and bus that travel on a road, as well as various transportation means such as a vertical take-off and landing aircraft (VTOL aircraft) for urban air mobility, a drone, or the like.

The technologies of the present disclosure relate to a method for detecting a GNSS attack on a vehicle using Vehicle-to-Infrastructure (V2I) communication and a vehicle terminal using the same. The vehicle performs GNSS attack detection using data identified from a GNSS receiver and data received through network communication with nearby infrastructure.

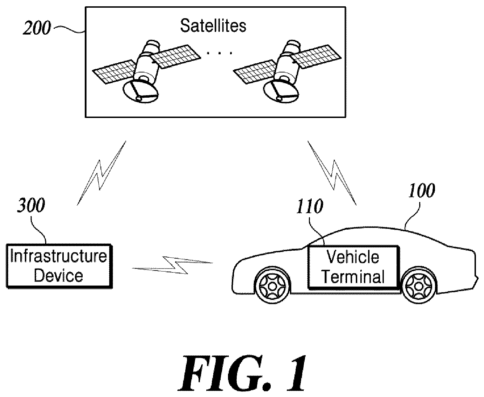

FIG. 1 is a conceptual diagram illustrating a vehicle environment in which technologies of the present disclosure may be used.

A vehicle 100 is equipped with a vehicle terminal 110 that supports data communication and navigation based on a GNSS. The vehicle terminal 110 may receive GNSS signals (for example, GPS signals) from one or more satellites 200 and analyze the received signals to perform location recognition and/or path planning.

The vehicle terminal 110 may support V2I communication. For example, the vehicle terminal 110 may receive and/or transmit predetermined data from/to a nearby infrastructure device 300. The infrastructure device 300 may be a device mounted on an infrastructure component of the environment in which the vehicle is traveling. For example, the infrastructure component may include a traffic light, stop, camera, vertiport, or the like. Additionally or alternatively, the infrastructure device 300 may be a device provided in an infrastructure component dedicated to the application of the present disclosure (e.g., a GNSS station that serves to transmit reference GNSS data for detecting the GNSS attack, or the like).

The vehicle terminal 110 may detect whether the GNSS attack is being performed on the vehicle 100 by comparing first GNSS data identified from the GNSS signal with second GNSS data received from the infrastructure device 300 through the V2I communication. The first GNSS data and the second GNSS data may be data that directly or indirectly indicates the locations of the vehicle 100 and the infrastructure device 300, respectively. The first GNSS data may include data identified from GNSS signals received from the satellites 200 by a GNSS receiver mounted on the vehicle 100, and the second GNSS data may include data identified from GNSS signals received from satellites 200 by the GNSS receiver mounted on the infrastructure device 300. The data identified from the GNSS signals may include data extracted from the GNSS signals (e.g., signal frequency, C/A code, P(Y) code, or the like), data measured from the GNSS signals (e.g., reception strength, Signal-to-Noise Ratio (SNR), or the like), and/or data estimated from the GNSS signals (e.g., latitude and longitude of the GNSS receiver, or the like). Additionally or alternatively, the second GNSS data may include predefined data stored in the infrastructure device 300. For example, when the infrastructure device 300 is mounted on an infrastructure having a fixed physical location, the vehicle terminal 110 may receive fixed GNSS data (for example, latitude, longitude, or the like) indicating the location of the infrastructure from the infrastructure device 300.

The vehicle terminal 110 may compare a difference between the first GNSS data and the second GNSS data with a predetermined threshold. When the difference between the two is greater than a threshold, the vehicle terminal 110 may determine that the GNSS attack is being performed on the vehicle 100, and if not, may determine that the GNSS attack is not being performed (that is, a normal situation). The threshold may be a value set by an administrator or user of the vehicle 100, or may be automatically (or differentially) set according to a state of the vehicle 100. The state of the vehicle 100 may include a current speed of the vehicle 100, a current acceleration of the vehicle 100, and/or an acceleration capability of the vehicle 100. The acceleration capability of the vehicle 100 may include a time it takes for the vehicle 100 to accelerate from a stationary state to a predetermined speed (e.g., 0-100 km/h acceleration time or 0-60 mi/h acceleration time).

The infrastructure device 300 may transmit GNSS data identified in real time from the GNSS signals and/or pre-stored GNSS data to the vehicle terminal 110 periodically or aperiodically. The infrastructure device 300 may transmit the GNSS data to a specific vehicle or broadcast GNSS data to a plurality of vehicles within a predetermined communication coverage. For example, the infrastructure device 300 may broadcast the GNSS data according to a preset period. As another example, based on a vehicle being recognized in the surrounding, the infrastructure device 300 may transmit the GNSS data to the recognized surrounding vehicle. As yet another example, based on one or more vehicles being recognized in the surrounding, the infrastructure device 300 may broadcast the GNSS data. For example, a speed camera may be configured to transmit the GNSS data whenever a vehicle is recognized by the camera.

In some examples, the infrastructure device 300 may additionally transmit information regarding a threshold for comparison with the difference between GNSS data. The infrastructure device 300 may transmit, to the vehicle terminal 110, a threshold set to reflect characteristics of the location where the infrastructure device is installed. For example, the threshold may be set differently for a two-lane road and a six-lane road.

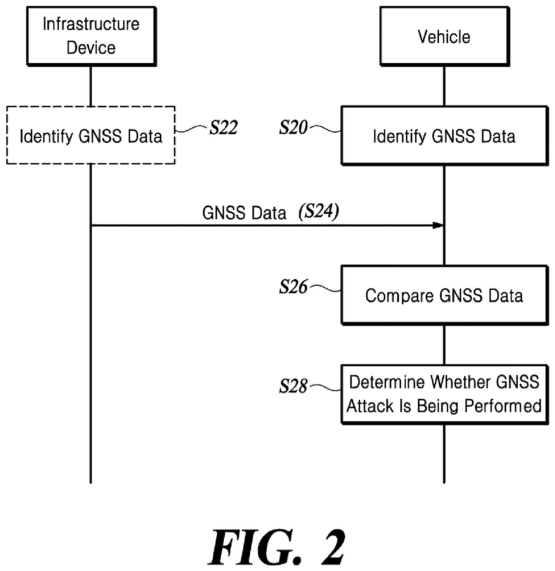

FIG. 2 is a flowchart illustrating a method for detecting the GNSS attack according to one embodiment of the present disclosure. In the following description, the operations performed in the vehicle terminal 110 are simply described as being performed by the vehicle 100.

The vehicle 100 and the infrastructure device 300 each receive the GNSS signals from the satellites 200 and identify the GNSS data (S20 and S22). The vehicle 100 and the infrastructure device 300 receive the GNSS signals according to a respective independently set periods, and identify the GNSS data based on the signals. In some embodiments, when the infrastructure device 300 is mounted on an infrastructure whose physical location is fixed, Step S22 may be omitted. In this case, the infrastructure device 300 may have stored GNSS data that directly or indirectly indicates the location of the infrastructure device in advance.

The infrastructure device 300 transmits GNSS data identified in real time from the GNSS signals or GNSS data stored in advance (S24). The transmission of the GNSS data may be performed periodically, or may be performed aperiodically based on the recognition of a vehicle in the surroundings. The transmission of the GNSS data may be performed in a broadcasting manner.

The vehicle 100 compares the GNSS data identified in Step S20 with the GNSS data received in Step S24 (Step S26). The vehicle 100 may check whether a difference between the two GNSS data is greater than a predetermined threshold. The threshold may be a value preset by a vehicle user or administrator, or may be dynamically set according to the state of the vehicle (for example, speed, acceleration, acceleration capability, or the like). As another example, the threshold may be a value received from the infrastructure device 300 simultaneously or at different times with Step S24. For example, the infrastructure device 300 may transmit the GNSS data and the threshold in the same signal. The infrastructure device 300 may transmit the threshold set to reflect the characteristics of the location where the device is installed. For example, the threshold may be set differently for a two-lane road and a six-lane road.

The vehicle 100 determines whether a GNSS attack is being performed on the vehicle 100 based on the comparison result of the GNSS data (S28). For example, if the difference between the GNSS data is greater than a threshold, it can be determined that a GNSS attack is being performed on the vehicle 100. Here, the GNSS attack on the vehicle 100 may include a Jamming attack and/or a Spoofing attack.

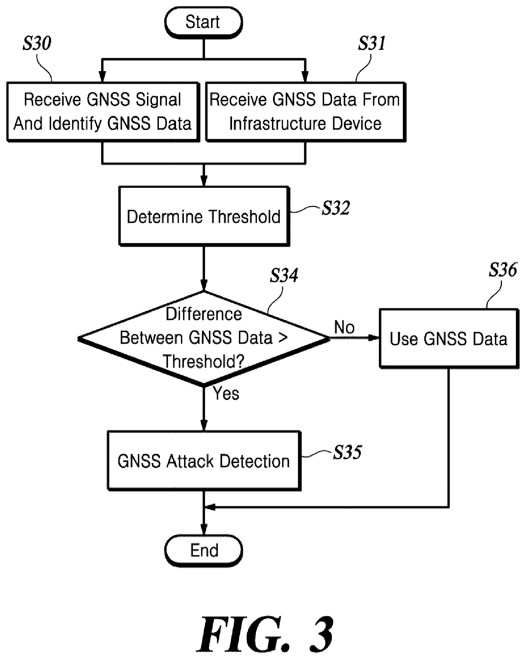

FIG. 3 is a flowchart illustrating an exemplary operation of the vehicle (specifically, the vehicle terminal) performing GNSS attack detection according to one embodiment of the present disclosure. In the following description, the operation performed by the vehicle terminal 110 is simply described as being performed by the vehicle 100.

The vehicle 100 may receive the GNSS signals from satellites 200 using the GNSS receiver and identify the GNSS data based on the signals (S30). The identified GNSS data may directly or indirectly indicate the location of the vehicle 100. Step S30 may be performed periodically according to a preset period.

The vehicle 100 monitors whether the GNSS data is received by the infrastructure device 300. The received GNSS data may directly or indirectly indicate the location of the infrastructure device 300. Depending on the embodiment, it is also possible to configure the monitoring to monitor whether the GNSS data is received only when the vehicle 100 is stopped or when the traveling speed is below a predetermined speed.

When the GNSS data is received from the infrastructure device 300 (S31), the vehicle 100 determines the threshold to be compared with the GNSS data (S32). For example, the vehicle 100 may determine a value preset by the user or the administrator as the threshold. As another example, the threshold may be dynamically determined based on the state of the vehicle 100. For example, the threshold may be set to be larger when the speed of the vehicle 100 is higher, the acceleration is higher, and/or the 0-100 km/h acceleration time is shorter. As another example, the threshold may be determined based on information about the environment on which the vehicle 100 is traveling. For example, when the road on which the vehicle 100 is traveling is a two-lane road, the threshold may be determined to be smaller than when the road is a six-lane road. As another example, the vehicle 100 may determine the threshold based on information received simultaneously or at different times with the GNSS data from the infrastructure device 300.

The vehicle 100 checks whether the difference between the GNSS data identified in Step S30 and the GNSS data received in Step S31 is greater than the threshold (S34). For example, the vehicle 100 may check whether the distance between the location of the vehicle 100 identified from the GNSS signals and the location of the infrastructure device 300 received from the infrastructure device 300 is greater than the threshold.

When the difference between the GNSS data is greater than the threshold, the vehicle 100 may determine that the GNSS attack is occurring (S35). That is, the vehicle 100 may determine that the GNSS receiver has received GNSS signals disturbed by a Jamming attack and/or a Spoofing attack. In response to detecting the GNSS attack, the vehicle 100 may also perform predefined defensive actions.

When the difference between the GNSS data is less than the threshold, the vehicle 100 may determine that the GNSS signals received by the GNSS receiver are reliable. Accordingly, the vehicle 100 may use the GNSS data identified from the GNSS signals according to the original purpose (S36). For example, the vehicle 100 may perform location recognition and/or path planning using the identified GNSS data.

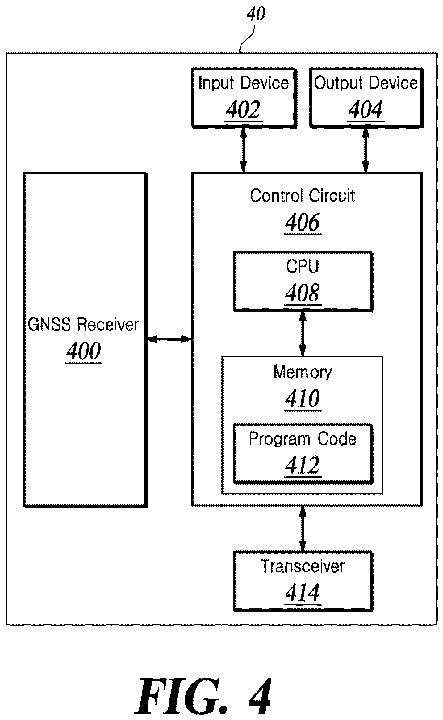

FIG. 4 illustrates a simplified functional block diagram of an exemplary electronic device that may be used to implement the method according to the present disclosure.

An electronic device 40 may be the vehicle terminal 110 mounted on the vehicle 100, and/or the infrastructure device 300 as illustrated in FIG. 1. As in the example illustrated in FIG. 4, the electronic device 40 may include all or some of a GNSS receiver 400, an input device 402, an output device 404, a control circuit 406, a central processing unit (CPU) 408, a memory 410, a program code 412, and a transceiver 414. The blocks illustrated in FIG. 4 are exemplary components, and some blocks may be added, changed, or deleted depending on the implementation. For example, in the case of the infrastructure device 300 where the electronic device 40 is applied to a fixed infrastructure whose physical location does not change, the GNSS receiver 400 may be omitted. In this case, the electronic device 40 may store GNSS data indicating the location of the infrastructure in the memory 410. In another example, the GNSS receiver 400 may be a standalone device capable of communicating with the electronic device 40.

The control circuit 406 executes the program code 412 in the memory 410 via the CPU 408 and controls the operation of the electronic device 40 accordingly. The control circuit 406 may interact with a user or exchange signals with other electronic control units/systems within the vehicle (or infrastructure) via the input device 402 and the output device 404. The transceiver 414 is used to receive and transmit wireless signals, transmitting received signals to the control circuit 406 and wirelessly outputting signals generated by the control circuit 406.

Meanwhile, the operational processes of the present invention can be implemented as computer-readable code on a computer-readable recording medium. The computer-readable recording medium may include all types of storage devices on which computer-readable data can be stored. The computer-readable recording medium may be a non-transitory medium such as a read-only memory (ROM), a random access memory (RAM), a compact disc ROM (CD-ROM), magnetic tape, a floppy disk, or an optical data storage device. In addition, the computer-readable recording medium may be distributed over computer systems connected through a network, and computer-readable program code can be stored and executed in a distributive manner.

Further, the components of the present invention may utilize integrated circuit structures such as memory, processors, logic circuits, look-up tables, and the like. These integrated circuit structures perform each of the functions described herein under the control of one or more microprocessors or other control devices. Further, the components of the present disclosure may be specifically implemented by portions of a program or code that includes one or more executable instructions for performing a particular logic function and is executed by one or more microprocessors or other control devices. Further, the components of the present invention may include or be implemented by a central processing unit (CPU), microprocessor, or the like that performs the respective functions. Further, the components of the present invention may store instructions executed by one or more processors in one or more memories.

Although exemplary embodiments have been described for illustrative purposes, those skilled in the art will appreciate that various modifications, additions, and substitutions are possible, without departing from the idea and scope of the claimed invention. Therefore, exemplary embodiments have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

### CROSS-REFERENCE TO RELATED APPLICATION

This application claims priority from Korean Patent Application No. 10-2023-0019677 filed on February 14, 2023, and Korean Patent Application No. 10-2024-0020301 filed on February 13, 2024, the disclosures of which are incorporated by reference herein in their entirety.

## Claims

1. A method performed by a vehicle terminal for detecting a Global Navigation Satellite System (GNSS) attack, the method comprising:
identifying first GNSS data based on one or more first GNSS signals received by a GNSS receiver of a vehicle;
receiving second GNSS data from an infrastructure device; and
determining whether the GNSS attack is being performed on the vehicle based on a comparison between the first GNSS data and the second GNSS data.

2. The method of claim 1, wherein the determining includes determining that the GNSS attack is being performed on the vehicle when a difference between the first GNSS data and the second GNSS data is greater than a predetermined threshold.

3. The method of claim 2, wherein the threshold is dynamically determined based on a state of the vehicle.

4. The method of claim 3, wherein the state of the vehicle includes a current speed of the vehicle, a current acceleration of the vehicle, an acceleration capability of the vehicle, or a combination thereof.

5. The method of claim 4, wherein the acceleration capability of the vehicle includes a time it takes for the vehicle to accelerate from a stationary state to a predetermined speed.

6. The method of claim 2, wherein the threshold is received from the infrastructure device simultaneously or at different times with the second GNSS data.

7. The method of claim 1, wherein the second GNSS data is transmitted periodically by the infrastructure device.

8. The method of claim 1, wherein the second GNSS data includes data identified from one or more second GNSS signals received by the infrastructure device.

9. The method of claim 1, wherein the second GNSS data includes predefined data indicating a location of the infrastructure device.

10. The method of claim 1, wherein the infrastructure device includes a device mounted on an infrastructure component of an environment in which the vehicle is driving, or a device mounted on an infrastructure component dedicated to detecting the GNSS attack.

11. The method of claim 1, wherein the GNSS attack includes a jamming attack, a spoofing attack, or a combination thereof.

12. A vehicle terminal for detecting a GNSS attack, the vehicle terminal comprising:
a memory storing instructions; and
at least one processor,
wherein the at least one processor executes the instructions to perform
identifying first GNSS data based on one or more first GNSS signals received by a GNSS receiver of a vehicle;
receiving second GNSS data from an infrastructure device; and
determining whether the GNSS attack is being performed on the vehicle based on a comparison between the first GNSS data and the second GNSS data.

13. The vehicle terminal of claim 12, wherein the at least one processor is configured to determine that the GNSS attack is being performed on the vehicle when a difference between the first GNSS data and the second GNSS data is greater than a predetermined threshold.

14. The vehicle terminal of claim 13, wherein the at least one processor is configured to dynamically determine the threshold based on a state of the vehicle.

15. The vehicle terminal of claim 13, wherein the at least one processor is configured to further perform receiving the threshold broadcasted simultaneously or at different times with the second GNSS data by the infrastructure device.
